# EUROPÄISCHE PATENTSCHRIFT

(11) **EP 3 034 763 B1**
(45) Veröffentlichungstag und Bekanntmachung des Hinweises auf die Patenterteilung: **27.06.2018**
(21) Anmeldenummer: 14198705.7
(22) Anmeldetag: 17.12.2014
(51) Int. Cl.: E05F 15/608, H02K 1/14, H02K 1/27

(54) **Karusselltür**
Revolving door
Porte à tambour

(43) Veröffentlichungstag der Anmeldung: 22.06.2016
(73) Patentinhaber: dormakaba Deutschland GmbH, 58256 Ennepetal (DE)
(72) Erfinder: FABRI, Daniel, 58256 Ennepetal (DE); BUSCH, Sven, 58256 Ennepetal (DE)
(74) Vertreter: Balder IP Law, S.L.

(56) Entgegenhaltungen:
- EP-A2- 2 713 479
- EP-A2- 2 755 305
- DE-A1- 19 818 433

## Beschreibung

Die Erfindung betrifft eine Karusselltür mit einem kompakten elektrischen Antrieb.
Bekannt sind Karusselltürantriebe die einen Asynchronmotor mit nachgeschaltetem Getriebe aufweisen. Hierbei kommt typischer Weise ein mehrstufiges Getriebe (Schneckenradgetriebe, Zahnriemenstufen) zum Einsatz. Beispielsweise aus EP 2 072 737 A2 ist ein Antrieb für eine Karusselltür bekannt, wobei das Drehmoment eines herkömmlichen elektrischen Antriebes über ein Umlenkgetriebe auf die Karusselltür übertragen wird.
Eine Karusselltür mit einem Direktantrieb, welcher auf ein Getriebe verzichtet, ist beispielsweise aus EP2755305A2 bekannt.
Es ist Aufgabe vorliegender Erfindung eine Karusselltür anzugeben, die bei kostengünstiger Herstellung und Montage einen kompakten Antrieb mit hoher Leistungsdichte und flexiblen Einsatzmöglichkeiten für unterschiedliche Karusselltürvarianten umfasst. Die Lösung der Aufgabe erfolgt durch die Merkmale des unabhängigen Anspruchs. Die abhängigen Ansprüche haben vorteilhafte Ausgestaltungen der Erfindung zum Gegenstand. Durch einen elektronisch kommutierten Vielpolmotor ist ein sehr kompakter und wartungsarmer Antrieb für eine Karusselltür möglich. Die entsprechend hohe Leistungsdichte des Antriebs wird erreicht durch die Verwendung von Blechpaketen für den Stator und für den Rotor.

Im Folgenden werden einige Begriffe zur erfindungsgemäßen Karusselltür definiert: Das Drehkreuz einer Karusselltür umfasst üblicherweise mehrere Türflügel, die sternförmig zur Drehachse angeordnet sind. Der Drehkreuzdurchmesser A ist dabei der größte Durchmesser des Kreises, den diese Türflügel beim Drehen des Drehkreuzes überstreichen. Entlang der Drehachse ist die Axialrichtung der Karusselltür definiert. Senkrecht zu dieser Axialrichtung steht die Radialrichtung. Um die Axialrichtung ist die Umfangsrichtung definiert.
Der Antrieb, ausgebildet als Vielpolmotor, weist einen Stator mit einer gewissen Spulenanzahl F auf. Der Statordurchmesser M wird bis zum radial äußeren Ende des Statorblechpaketes gemessen. Der Rotor umfasst ein Rotorblechpaket, das auf einer Rotorscheibe montiert ist. Ebenso umfasst der Stator eine Statorscheibe, wobei auf der Statorscheibe ein Statorblechpaket montiert ist. Die Statorscheibe kann aus mehreren Scheibenblechen zusammengesetzt sein. Die Statorscheibe und die Rotorscheibe liegen gegenüber, so dass zwischen den beiden Scheiben die Statorblechpakete und die Rotorblechpakete angeordnet sind.
Im Rotor sind radial innen am Rotorblechpacket mehrere Permanentmagneten angeordnet. Der Rotordurchmesser B ist bis zu dem radial äußeren Ende des Rotorblechpaketes definiert. Eine Antriebshöhe C des elektrischen Antriebes wird in Axialrichtung von einer äußeren Seite der Statorscheibe bis zu einer äußeren Seite der Rotorscheibe gemessen. Das Statorblechpaket umfasst einen geschlossenen Ring und radiale Zähne zum Aufstecken der Spulen, wobei das Statorblechpaket aus mehreren gestapelten Statorringen zusammengesetzt ist, und wobei vorzugsweise der einzelne Statorring aus mehreren in Umfangsrichtung nebeneinander angeordneten Statorsegmenten zusammengesetzt ist. Auf die Zähne des Statorblechpaketes wird jeweils eine Spule aufgesteckt. Die einzelnen Statorringe bilden sowohl einen Teil der Zähne als auch einen Teil des geschlossenen Rings. Die Zähne bilden dabei den Eisenkern der aufgesteckten Spulen und dienen gleichzeitig zur Positionierung und Fixierung der Spulen im Stator. Der einzelne Statorring kann in mehrere Statorsegmente unterteilt werden. In Umfangsrichtung werden die Statorsegmente aneinander gesetzt, so dass beispielsweise drei, vier oder fünf Statorsegmente einen Statorring bilden.
Ferner ist bevorzugt vorgesehen, dass die Zähne an ihren Flanken eine Verdickung zum Halten der Spulen aufweisen, indem die Zähne in einer zur Drehachse senkrechten Ebene eine Zahnbreite L aufweisen und die Zahnbreite L an der Wurzel des Zahns und am Kopf des Zahns kleiner ist als in der Mitte des Zahns.
Die Zähne des Statorblechpaketes bilden nicht nur den metallenen Kern der Spulen, sondern können auch gleichzeitig für eine form- und kraftschlüssige Aufnahme der Spulen verwendet werden. Die Wurzel des Zahnes befindet sich radial innerhalb der Mitte. Der Kopf des Zahnes ist radial außerhalb der Mitte definiert. Theoretisch ist es auch möglich, die Verdickung in Axialrichtung auszubilden. Allerdings aus fertigungstechnischen Gründen bietet sich die Verdickung in Umfangsrichtung, also in der zur Drehachse senkrechten Ebene an, da so ebene und gleiche Bleche für die einzelnen Statorringe bzw. Statorsegmente verwendet werden können. Erfindungsgemäß werden die einzelnen Spulen des Stators als Spulenketten gefertigt. Dabei ist pro Phase eine Spulenkette vorgesehen. Üblicherweise umfasst der Antrieb drei Phasen und somit drei Spulenketten. Die einzelne Spulenkette weist mehrere Spulenkörper auf. Die Spulenkörper sind aus Kunststoff gefertigt. Diese Spulenkörper werden bei der Montage des Antriebs auf die beschriebenen Zähne aufgesteckt. Der Draht einer einzelnen Spulenkette wird als durchgehender Draht auf einem Spulenkörper gewickelt, führt zum nächsten Spulenkörper und wird auf den nächsten Spulenkörper gewickelt. Die Verwendung der Spulenkette ermöglicht eine sehr einfache Verdrahtung, da nur die Enden der Spulenkette, beispielsweise an einer Leiterplatte, angeschlossen werden müssen. Des Weiteren ermöglicht die Spulenkette eine sehr einfache Montage des Antriebs, da die einzelnen Spulen der Spulenkette lediglich auf die Zähne aufgesteckt werden müssen, wobei die Spulen während der Montage nicht mehr miteinander verbunden werden müssen. Beispielsweise bei Verwendung der drei Phasen, werden die Spulen einer Spulenkette auf jeden dritten Zahn aufgesteckt.
Bevorzugt weist der Draht einer Spulenkette keine Verbindungsstellen auf. Es wird also ein durchgehender Draht für alle Spulen der Kette verwendet. Allerdings kann es sich bei relativ langen Spulenketten zur Vereinfachung der Fertigung und für eine vereinfachte Handhabung bei der Spulenmontage anbieten, eine gewisse Anzahl an Verbindungsstellen im Draht der Spulenkette vorzusehen. Hierzu sind höchstens drei, vorzugsweise höchstens zwei, besonders vorzugsweise höchstens eine, Verbindungsstelle vorgesehen. Die Verbindungsstelle ist insbesondere eine Lötstelle. In besonders bevorzugter Variante ist vorgesehen, vor der Montage der Spulenkette auf den Zähnen, die Verbindungsstellen auszubilden, so dass lediglich eine Spulenkette pro Phase montiert werden muss. In einer alternativen Variante kann die Ausbildung der Verbindungsstellen auch nach der Montage der Spulenkette auf den Zähnen erfolgen.

Vorzugsweise weist der Stator radial innerhalb der Spulen zumindest ein Drahtführungselement auf. Das Drahtführungselement weist eine isolierte Oberfläche auf und ist bevorzugt aus Kunststoff gefertigt. Es wird entweder ein Drahtführungselement in Ringform verwendet, oder es werden mehrere Drahtführungselemente in Segmentform aneinandergesetzt. An dem zumindest einen Drahtführungselement werden die Drähte zwischen den Spulen geführt und/oder befestigt. Dadurch wird sichergestellt, dass sich die Drähte in einer bestimmten Position befinden und nicht etwa abstehen und am Rotor schleifen. Die Drähte sind durch eine Lackschicht isoliert. Diese Lackisolierung kann jedoch Fehlstellen aufweisen. Wenn zwei Drähte übereinander liegen (Wicklung auf der Spule) dann ist die Wahrscheinlichkeit, dass sich zwei Fehlstellen treffen gering. Ohne Drahtführungselement würde der Draht jedoch auf dem Metall des Stators aufliegen, wobei die Wahrscheinlichkeit groß ist, dass eine Fehlstelle Kontakt zum Metall des Stators hat und dadurch ein Kurzschluss entsteht. Weiterhin könnte die Lackisolierung durch die scharfen Kanten des Metalls des Stators beschädigt werden. So ist die elektrische Isolation der Drähte durch das zumindest eine Drahtführungselement sichergestellt. Dies gewährleistet das der Motor nicht ausfällt und funktionssicher ist.

Die Statorringe, insbesondere die Statorsegmente, werden durch vorteilhafte Verbindungselemente miteinander verbunden. Diese Verbindungselemente erstrecken sich dabei in Axialrichtung und sind beispielsweise Bolzen, Schrauben oder Nieten. Insbesondere reichen die Verbindungselemente auch durch eine Statorscheibe, so dass durch die Verbindungselemente das Statorblechpaket auf der Statorscheibe befestigt ist. Die einzelnen Verbindungselemente weisen Enden, beispielsweise Köpfe, Müttern oder Schließringe, auf. Vorteilhafterweise ist vorgesehen, dass das zumindest eine Drahtführungselement an diesen Enden der Verbindungselemente positioniert und/oder befestigt ist. Hierzu weist das zumindest eine Drahtführungselement mehrere Ausnehmungen auf. In diesen Ausnehmungen stecken die Enden der Verbindungselemente. Dadurch ist eine kostengünstige und einfach zu montierende Befestigung des Drahtführungselementes möglich.

In dem zumindest einen Drahtführungselement sind bevorzugt mehrere Schlitze ausgebildet. In diese Schlitze werden die zwischen den Spulen verlaufenden Drähte eingesteckt und geklemmt. Dadurch sind die Drähte am zumindest einen Drahtführungselement sowohl geführt, als auch befestigt. Gleichzeitig dient diese Befestigung der Drähte in den Schlitzen auch dazu, dass die Spulen und das zumindest eine Drahtführungselement gegenseitig zueinander fixiert sind. So verhindern die Drähte in den Schlitzen ein Abziehen der Spulen in Radialrichtung nach außen. Gleichzeitig verhindern die Drähte in den Schlitzen, dass das Drahtführungselement radial nach innen oder in Axialrichtung bewegt werden kann.
Bevorzugt sind das Drahtführungselement und die Spulenkörper formschlüssig verbunden. Insbesondere umfasst die formschlüssige Verbindung eine Aussparung im Drahtführungselement und einen in die Aussparung eingreifenden Fortsatz am Spulenkörper, oder umgekehrt.
Bevorzugt ist vorgesehen, dass das zumindest einen Drahtführungselement mit Ausnahme der optionalen Fixierung an den Enden der Verbindungselemente, mit Ausnahme der optionalen Fixierung über die Drähte in den Schlitzen, und mit Ausnahme der direkten formschlüssigen Verbindung mit den Spulenkörpern, weder über weitere Elemente, wie Nieten oder Schrauben, noch über stoffschlüssige Mittel am Stator befestigt ist. Lediglich die Fixierung des Drahtführungselementes über die Enden der Verbindungselemente und/oder über die Fixierung über die Drähte in den Schlitzen und/oder über die direkte formschlüssige Verbindung mit den Spulenkörpern, reicht aus, um das zumindest eine Drahtführungselement im Stator sicher zu befestigen.

Auch für die Spulen bedarf es bevorzugt keiner zusätzlichen Befestigungselemente, wie Nieten, Schrauben oder Bolzen und auch keiner stoffschlüssigen Befestigung. In Umfangsrichtung und in die beiden Axialrichtungen sind die Spulen durch das Aufstecken auf die Zähne fixiert. In Radialrichtung nach innen können die Spulen sich nicht bewegen, da sie an dem geschlossenen Ring des Statorblechpaketes anliegen. Eine Bewegung der Spulen in Radialrichtung nach außen ist nicht möglich, da die Spulen durch die Verdickung der Zähne und/oder durch das Einhängen der Drähte in den Schlitzen und/oder durch die direkte formschlüssige Verbindung von Spulenkörper und Drahtführungselement fixiert sind.

Bevorzugt ist vorgesehen, dass der Stator zumindest eine Anlauffläche, vorzugsweise aus Kunststoff, umfasst, wobei die Anlauffläche radial außerhalb des halben Statordurchmessers M ausgebildet ist, wobei die Anlauffläche im normalen Betrieb vom Rotor beabstandet ist, und wobei bei einem Kippen des Rotors der Rotor an der Anlauffläche anliegt.

Die Lagerung zwischen Stator und Rotor ist bevorzugt relativ nah an der Drehachse vorgesehen. Dadurch kann ein kleines Axiallager verwendet werden, wodurch am Axiallager relativ geringe Tangentialgeschwindigkeiten auftreten. Somit ist das Lager kostengünstig, wartungsarm und betriebssicher gestaltet. Durch diese Positionierung des Lagers relativ weit in der Mitte, kann jedoch ein Kippen des Rotors gegenüber dem Stator nicht in allen Zuständen vermieden werden. Beispielsweise bei der Montage des Antriebs an einer übergeordneten tragenden Struktur oder bei der Montage des Drehkreuzes am Antrieb kann es zu solch einem Kippen kommen. Um das Kippen zu begrenzen, ist bevorzugt am Stator eine Anlauffläche vorgesehen. Diese Anlauffläche ist vorteilhafterweise aus Kunststoff gebildet. Die Anlauffläche befindet sich vorteilhafterweise radial außerhalb des halben Statordurchmessers M. Im normalen Betrieb des Antriebes ist der Rotor von der Anlauffläche beabstandet und lediglich bei einem Kippen des Rotors gegenüber dem Stator liegt der Rotor an der Anlauffläche an.

Bevorzugt ist vorgesehen, dass die zumindest eine Anlauffläche an den Spulenkörpern und/oder dem zumindest einen Drahtführungselement ausgebildet ist, wobei vorzugsweise mehrere Anlaufflächen durch mehrere sich in Axialrichtung erstreckende Dome gebildet sind. Vorteilhafterweise wird die zumindest eine Anlauffläche an den Spulenkörpern und/oder an dem zumindest einen Drahtführungselement ausgebildet. So können diese aus Kunststoff gefertigten Bauteile gleichzeitig auch für die Anlauffläche genutzt werden. Insbesondere werden eine Vielzahl an Anlaufflächen durch sich in Axialrichtung erstreckende Dome gebildet. Diese Dome sind dabei insbesondere integraler Bestandteil der Spulenkörper bzw. des zumindest einen Drahtführungselementes.

Für eine einfache Kontaktierung der Spulen im Stator mit einer Steuerung und/oder einer Stromversorgung ist vorteilhafterweise eine Leiterplatte im Stator angeordnet. Die Drähte der Spulen, insbesondere die Enden der Spulenketten, werden mit dieser Leiterplatte kontaktiert. Die Leiterplatte befindet sich vorteilhafterweise radial innerhalb der Spulen. Auf der Leiterplatte sind bevorzugt Schneidklemmen angeordnet. Diese Schneidklemmen sind Blechelemente, in die die Drähte eingesteckt werden können. Durch das Einstecken der Drähte in die Schneidklemmen werden die Drähte gleichzeitig abisoliert und kontaktiert. Nach dem Einstecken der Drähte in die Schneidklemmen können die Drähte entsprechend abgelängt werden. Die Schneidklemmen ermöglichen somit eine sehr einfache und schnelle Montage, wobei gleichzeitig ein sicherer Kontakt zwischen den Drähten und der Leiterplatte sichergestellt ist.

Bevorzugt ist ein Anschlussstecker vorgesehen. Der Anschlussstecker dient zum Kontaktieren des Antriebs. In den Anschlussstecker kann somit ein Gegenstecker eingesteckt werden, der zu einer Stromversorgung und/oder einer Steuereinheit führt. Insbesondere führt der Gegenstecker auf die Steuerung, wobei an der Steuerung die Stromversorgung angeschlossen ist. Der Anschlussstecker selbst ist über die Leiterplatte mit den Drähten der Spule elektrisch leitend verbunden. Der Anschlussstecker ist fest am Stator angeordnet und nicht etwa über lose hängende Kabel mit dem Stator verbunden. Dadurch wird während der Endmontage der Karusselltür sichergestellt, dass der Anschlussstecker und seine elektrisch leitende Verbindung nicht beschädigt werden. Ferner erleichtert sich die Montage des Antriebs an einer übergeordneten Struktur.

Insbesondere ist in der Statorscheibe eine Aussparung vorgesehen, wobei der Anschlussstecker in dieser Aussparung sitzt. Auf einer ersten Seite der Statorscheibe erfolgt die Kontaktierung zwischen dem Anschlussstecker und der Leiterplatte. Auf der gegenüberliegenden zweiten Seite der Statorscheibe ist der Anschlussstecker in der Aussparung zum Einstecken des Gegensteckers zugänglich. Der Anschlussstecker ist in der Aussparung sicher aufgenommen und positioniert und kann somit nicht beschädigt werden.

Insbesondere ist vorgesehen, dass der Anschlussstecker an der zweiten Seite nicht über die Statorscheibe übersteht. Der Anschlussstecker steht also an der Außenseite des Antriebs nicht über und ist somit sehr sicher und beschädigungsgeschützt aufgenommen.

An der ersten Seite, also an der Innenseite der Statorscheibe, ist der Anschlussstecker vorzugsweise direkt mit der Leiterplatte kontaktiert. Es sind somit keine Kabel zwischen dem Anschlussstecker und der Leiterplatte vorgesehen. Insgesamt ergibt sich eine kompakte Baugruppe aus Leiterplatte und darauf befindlichem Anschlussstecker. Diese Baugruppe kann als Gesamtes in dem Stator montiert werden.

Nachfolgend wird die Erfindung anhand der begleitenden Zeichnungen im Detail erläutert. Dabei zeigen:
- Fig. 1: eine erfindungsgemäße Karusselltür gemäß einem Ausführungsbeispiel,
- Fig. 2: eine Schnittansicht des Antriebs der erfindungsgemäßen Karusselltür,
- Fig. 3: ein Detail zu Fig. 2,
- Fig. 4: den Stator des Antriebs,
- Fig. 5: ein Statorsegment des Antriebs,
- Fig. 6: einen teilweise montierten Stator,
- Fig. 7: den Rotor des Antriebs,
- Fig. 8: ein Rotorsegment,
- Fig. 9: eine Detailansicht des Rotors,
- Fig. 10: einen teilweise montierten Rotor,
- Fig. 11: ein Detail des Stators,
- Fig. 12: eine Spulenkette des Stators,
- Fig. 13: einen Spulenkörper für die Spulen des Stators,
- Fig. 14: ein Detail des Antriebs gemäß einer ersten Variante,
- Fig. 15: ein Detail des Antriebs gemäß einer zweiten Variante, und
- Fig. 16: ein Detail des Antriebs mit Anschlusssteckern.

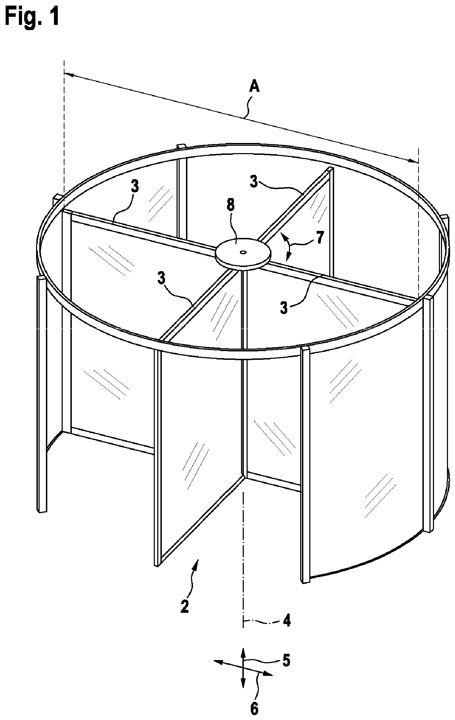

Im Folgenden wird anhand der Fig. 1 bis 16 ein Ausführungsbeispiel einer erfindungsgemäßen Karusselltür 1 gemäß vorliegender Erfindung erläutert.

Fig. 1 zeigt eine isometrische Ansicht der Karusselltür 1. Die Karusselltür 1 umfasst ein Drehkreuz 2. Dieses Drehkreuz 2 weist vier Türflügel 3 auf. Die Türflügel 3 sind jeweils um 90° zueinander abgewinkelt. Das Drehkreuz 2 ist um eine Drehachse 4 drehbar angeordnet. Die Drehachse 4 streckt sich in Axialrichtung 5. Senkrecht zur Axialrichtung 5 ist eine Radialrichtung 6 definiert. Um die Axialrichtung 5 ist eine Umfangsrichtung 7 definiert.

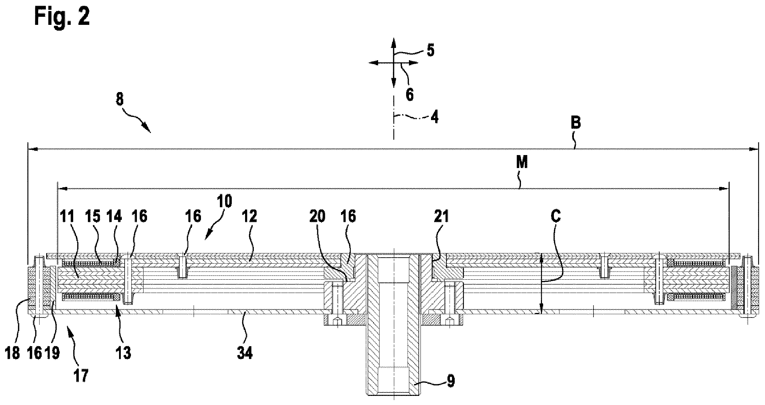

Auf dem Drehkreuz 2 ist ein Antrieb 8 angeordnet. Dieser Antrieb 8 ist als elektronisch kommutierter Vielpolmotor ausgebildet. Der Rotor 17 (s. Fig. 2 ff.) dieses Antriebs 8 ist koaxial zur Drehachse 4 mit dem Drehkreuz 2 verbunden. Dadurch ermöglicht der Antrieb 8 einen direkten und getriebelosen Antrieb des Drehkreuzes 2.

Gemäß Fig. 1 weist das Drehkreuz 2 mit seinen Türflügeln 3 einen größten Drehkreuzdurchmesser A auf. Der Durchmesser A ist in Radialrichtung 6, also senkrecht zur Axialrichtung 5, definiert.

Fig. 2 zeigt einen Schnitt durch den Antrieb 8. Der Antrieb 8 umfasst einen Stator 10 und den Rotor 17. Wie Fig. 1 zeigt, ist der Antrieb 8 über dem Drehkreuz 2 angeordnet. Dabei befindet sich der Rotor 17 zwischen dem Drehkreuz 2 und dem Stator 10. Entgegen der gezeigten Ausführungsform kann der Antrieb 8 auch unter dem Drehkreuz 2 angeordnet werden, wobei dann ebenfalls der Rotor 17 zwischen Stator 10 und Drehkreuz 2 angeordnet wird.

Fig. 2 zeigt ein drehfest mit dem Rotor 17 verbundenes Abtriebselement 9. Über dieses Abtriebselement 9 ist das Drehkreuz 2 drehfest mit dem Rotor 17 verbunden. Dieses Abtriebselement 9 dient insbesondere zur drehfesten Verbindung von herkömmlichen Drehkreuzen 2 mit dem erfindungsgemäßen Antrieb 8. Bei einer speziellen Konstruktion des Drehkreuzes 2 für den gezeigten Antrieb 8, kann das Drehkreuz 2, insbesondere die einzelnen Türflügel 3, auch direkt mit dem Rotor 17, ohne separatem Abtriebselement 9 verbunden werden.

Der Stator 10 umfasst eine Statorscheibe 12. Am äußeren Umfang der Statorscheibe 12 ist ein Statorblechpaket 11 angeordnet. Auf diesem Statorblechpaket 11 stecken die einzelnen Spulen 13 des Stators 10.

Jede Spule umfasst einen Spulenkörper 14, beispielsweise aus Kunststoff. Auf diesem Spulenkörper 14 befinden sich die Wicklungen 15 der einzelnen Spule 13.

Über Verbindungselemente 16, hier ausgebildet als Schließringbolzensysteme, ist das Statorblechpaket 11 mit der Statorscheibe 12 verbunden.

Der Rotor 17 umfasst eine Rotorscheibe 34. Diese Rotorscheibe 34 liegt der Statorscheibe 12 gegenüber. Zwischen den beiden Scheiben 34, 12 ist das Statorblechpaket mit den Spulen 13 angeordnet.

Am äußeren Umfang der Rotorscheibe 34 ist ein Rotorblechpaket 18 angeordnet. Dieses Rotorblechpaket 18 ist über Verbindungselemente 16 in Form von Schließringbolzensystemen mit der Rotorscheibe 34 verbunden.

Radial innerhalb des Rotorblechpaketes 18 sind auf dem Rotorblechpaket 18 mehrere Permanentmagneten 19 angeordnet.

Im Bereich der Drehachse 4 sind zwischen der Statorscheibe 12 und der Rotorscheibe 34 ein Axiallager 20 und ein Radiallager 21 ausgebildet. Im gezeigten Ausführungsbeispiel sind das Axiallager 20 und das Radiallager 21 als Gleitlager ausgebildet.

Ferner zeigt Fig. 2 einen größten Rotordurchmesser B senkrecht zur Axialrichtung 5 sowie einen größten Statordurchmesser M, ebenfalls senkrecht zur Axialrichtung 5. Der Statordurchmesser M ist dabei bis zu den äußeren Enden des Statorblechpaketes 11 definiert.

Fig. 2 zeigt für den Antrieb 8, dass aufgrund der Verwendung des Statorblechpaketes 11 und des Rotorblechpaketes 18 eine sehr hohe Leistungsdichte für den Antrieb 8 möglich ist. Dadurch kann der Antrieb relativ klein konstruiert werden. Dies bezieht sich sowohl auf den Rotordurchmesser B als auch auf eine Antriebshöhe C, welche in Axialrichtung 5 definiert ist.

Wie in Zusammenschau mit Fig. 1 zu erkennen ist, ermöglicht der Antrieb 8 mit relativ kleinem Rotordurchmesser B größtmögliche Gestaltungsfreiheit für die Deckenkonstruktion über der Karusselltür 1. Der Großteil des Deckenbereiches über der Karusselltür 1 kann absolut frei, beispielsweise transparent mit Glasscheiben gestaltet werden. Lediglich eine kleine Fläche ist hier durch den Antrieb 8 bedeckt.

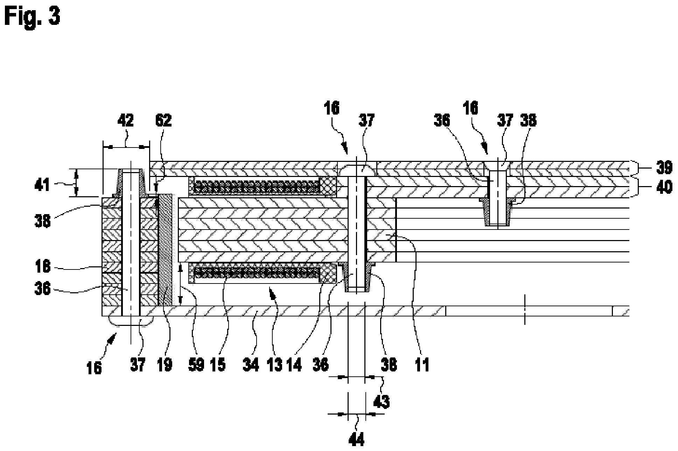

Fig. 3 zeigt einen Detailausschnitt zu Fig. 1. In dieser Darstellung ist die genaue Ausgestaltung der Verbindungselemente 16 als Schließringbolzensystem zu sehen.

Für die Verbindungselemente 16 werden Bolzen 36 verwendet. Die Bolzen 36 weisen Köpfe 37 auf. Die Köpfe 37 sind entweder linsenförmig oder als Senkköpfe ausgebildet. An den den Köpfen 37 gegenüberliegenden Enden der Bolzen 36 werden Schließringe 38 aufgepresst.

Bevor diese Schließringe 38 aufgepresst werden, werden die Bolzen 36 in Axialrichtung 5 vorgespannt.

Wie Fig. 3 zeigt, ist die Statorscheibe 12 aus einzelnen Scheibenblechen 39, 40 zusammengesetzt. Die Verbindungselemente 16 werden nicht nur zur Verbindung der Blechpakete (Statorblechpaket 11 und Rotorblechpaket 18) untereinander, sondern auch zur Verbindung der Blechpakete mit der Statorscheibe 12 bzw. der Rotorscheibe 34 verwendet, als auch zur Verbindung der einzelnen Scheibenbleche 39, 40.

Fig. 3 zeigt ferner einen Bolzendurchmesser 43 der Bolzen 36 sowie einen Verbindungslochdurchmesser 44 der Verbindungslöcher 27, in denen die Bolzen 36 stecken. Der Verbindungslochdurchmesser 44 ist etwas größer gewählt als der Bolzendurchmesser 43. Es ist zu beachten, dass das Schließringbolzensystem den Vorteil hat, dass die Bolzen 36 in Axialrichtung vorgespannt werden und die Verbindungslöcher 27 nicht ausfüllen. Es verbleibt also bei der Montage ein gewisses Spiel zum Verschieben der einzelnen Bleche untereinander.

Fig. 3 zeigt ferner einen begrenzten axialen Bauraum 41 und einen radialen Bauraum 42 der hier für die Schließringe 38 zur Verfügung steht. Die Permanentmagneten 19 ragen mit einem ersten Überstand 59 weiter in Axialrichtung 5 als das Statorblechpaket 11. Auf der gegenüberliegenden Seite stehen die Permanentmagneten 19 mit einem zweiten Überstand 62 über das Rotorblechpaket 18 über.

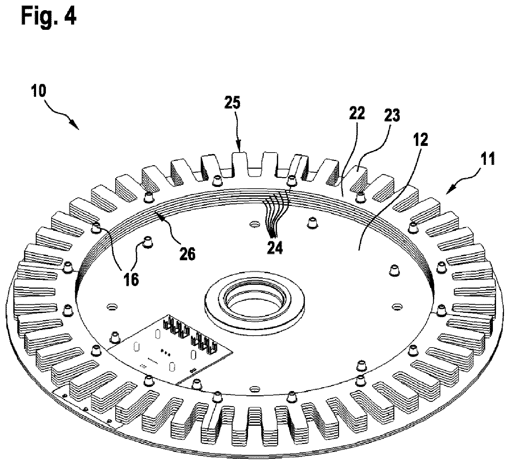

Fig. 4 zeigt den Stator 10 ohne den aufgesteckten Spulen 13. Gemäß Fig. 4 umfasst das Statorblechpaket 11 einen geschlossenen Ring 22, von dem in Radialrichtung 6 nach außen mehrere Zähne 23 abstehen. Auf diese Zähne 23 werden die Spulenkörper 14 aufgesteckt.

Das Statorblechpaket 11 ist zusammengesetzt aus mehreren, übereinandergestapelten Statorringen 24. Der einzelne Statorring 24 wiederum ist zusammengesetzt aus beispielsweise vier Statorsegmenten 25.

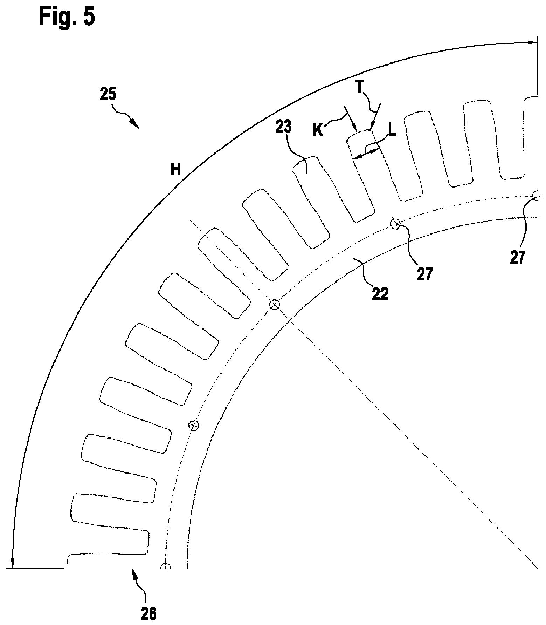

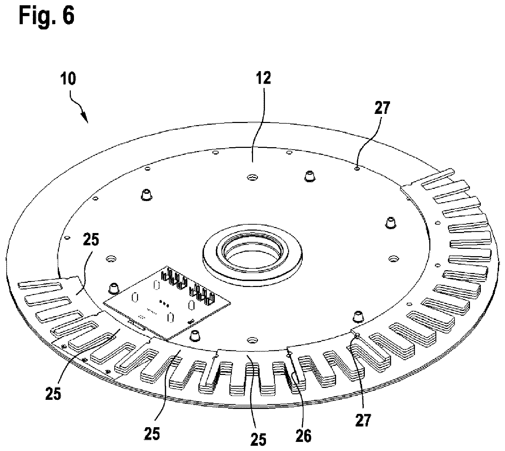

Fig. 5 zeigt im Detail eines der Statorsegmente 25. Fig. 6 zeigt, wie die einzelnen Statorsegmente 25 versetzt zueinander angeordnet werden. Jeweils zwischen zwei Statorsegmenten 25 entsteht ein Stoß 26. In den Statorsegmenten 25 sind Verbindungslöcher 27 vorgesehen. Durch diese Verbindungslöcher 27 werden die Bolzen 36 der Verbindungselemente 16 gesteckt.

Fig. 5 zeigt den Segmentwinkel H, den Kopfradius K des einzelnen Zahns 23, den Eckenradius T des einzelnen Zahns 23 sowie die Zahnbreite L des einzelnen Zahns 23.

Der Kopfradius K und der Eckenradius T werden entsprechend ausgebildet, um möglichst wenig Rastmoment zu erzeugen. Die Zahnbreite L ist in der Mitte des Zahns 23 etwas vergrößert. Dadurch klemmen die aufgesteckten Spulenkörper 14 auf den Zähnen 23.

Wie insbesondere Fig. 6 zeigt, liegen die Stöße 26 in der Mitte des einzelnen Zahns 23. Des Weiteren werden die Statorsegmente 25 versetzt zueinander angeordnet, so dass die Stöße 26 der einzelnen Statorringe 24 sich nicht überlappen. Dies hat entsprechend positive Auswirkungen auf den magnetischen Fluss im Statorblechpaket 11.

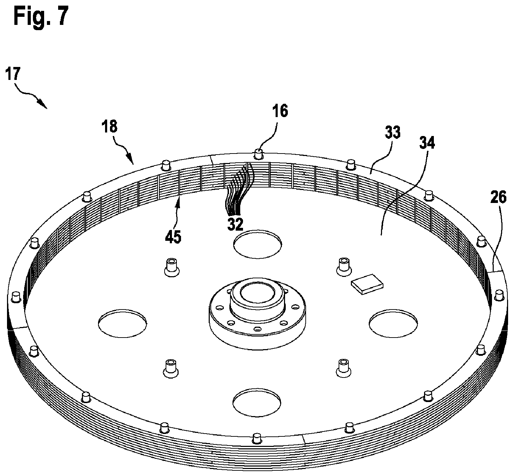

Fig. 7 zeigt im Detail den Rotor 17 ohne den Permanentmagneten 19. Das Rotorblechpaket 18 ist, ähnlich wie das Statorblechpaket 11, zusammengesetzt aus übereinandergestapelten Rotorringen 32. Die einzelnen Rotorringe 32 wiederum sind aus Rotorsegmenten 33 zusammengesetzt. Zwischen den Rotorsegmenten 33 entstehen Stöße 26. In den Rotorsegmenten 33 sind entsprechende Verbindungslöcher 27 vorgesehen. Durch diese Verbindungslöcher 27 werden die Bolzen 36 (s. Fig. 3) gesteckt.

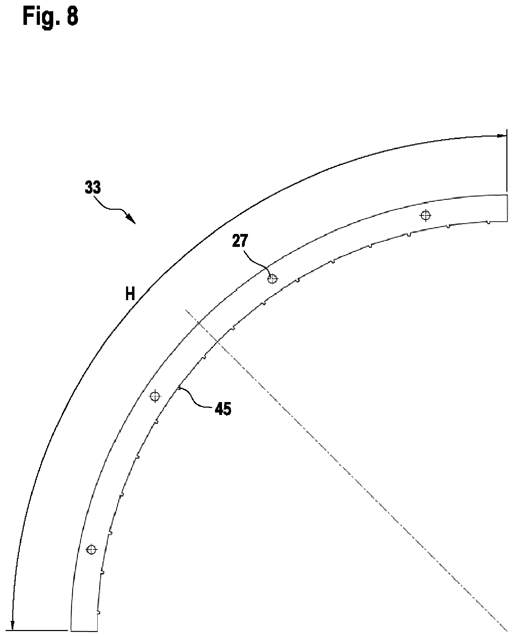

Fig. 8 zeigt im Detail ein einzelnes Rotorsegment 33 mit dessen Segmentwinkel H.

Radial innen an den Rotorsegmenten 33 sind Positionierungsfortsätze 45 ausgebildet. Diese Positionierungsfortsätze 45 sind hier kleine, radial nach innen ragende Nasen.

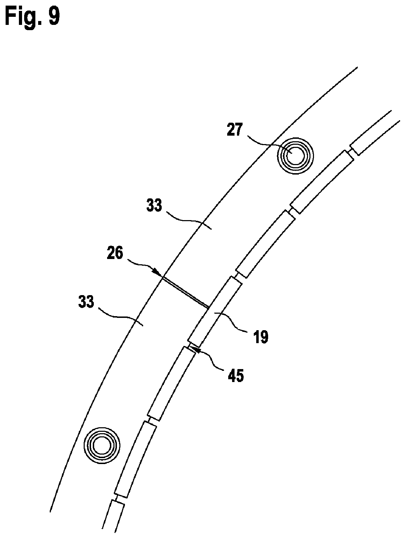

Wie insbesondere die Zusammenschau von Fig. 9 und Fig. 7 zeigt, bilden diese Positionierungsfortsätze 45 im zusammengesetzten Zustand des Rotorblechpaketes 18 kleine Stege zwischen den einzelnen Permanentmagneten 19. Die Positionierungsfortsätze 45 sorgen für den definierten Abstand der einzelnen Permanentmagneten 19 zueinander.

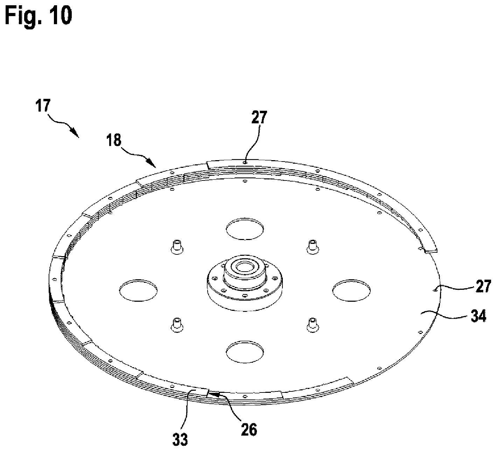

Fig. 10 zeigt einen teilmontierten Zustand des Rotorblechpaketes 18. Ähnlich wie bei dem Statorblechpaket 11 werden auch hier die einzelnen Rotorsegmente 33 versetzt zueinander angeordnet, so dass die Stöße 26 einzelner Rotorringe 32 nicht überlappen. Dies wirkt sich positiv auf den magnetischen Fluss aus.

Der Segmentwinkel H der Statorsegmente 25 und der Rotorsegmente 33 ist geringfügig kleiner als 360°/Segmentanzahl. Die einzelnen Segmente 25, 33 werden in Position gebracht und über die Verbindungselemente 16 fixiert. Dabei ist der Bolzendurchmesser 43 kleiner als der Verbindungslochdurchmesser 44 (s. Fig. 3). Dadurch ist ein gewisses Spiel bei der Montage möglich.

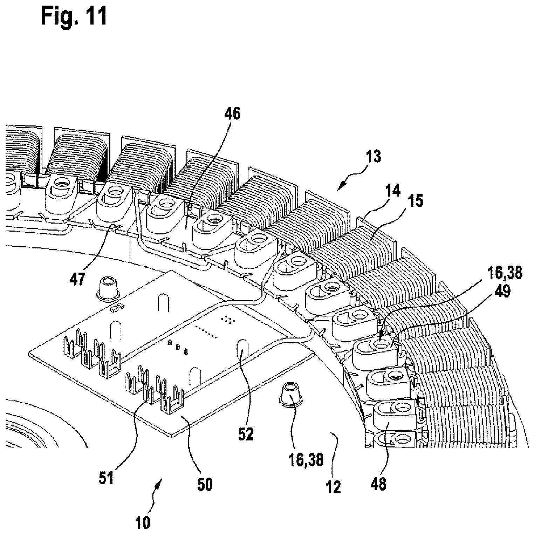

Fig. 11 zeigt ein Detail des Stators 10. Anhand dieser Darstellung ist gut zu erkennen, dass radial innerhalb der einzelnen Spulen 13 sogenannte Drahtführungselemente 46, insbesondere aus Kunststoff, aufgesetzt sind. Diese Drahtführungselemente 46 führen die Drähte zwischen den einzelnen Spulen 13. Hierzu weisen die Drahtführungselemente 46 Schlitze 47 auf, in die die Drähte eingesteckt werden können.

Auf der Statorscheibe 12, in dem Hohlraum zwischen der Statorscheibe 12 und der Rotorscheibe 34, befindet sich eine Leiterplatte 50. Auf dieser Leiterplatte 50 sind Schneidklemmen 51 angeordnet. In diese Schneidklemmen 51 können die Drähte eingesteckt werden. Dabei erfolgt durch die Funktion der Schneidklemmen 51 gleichzeitig ein Abisolieren der Drähte als auch ein Kontaktieren der Drähte. Über Rastverbindungen 52 ist die Leiterplatte 50 mit der Statorscheibe 12 verbunden.

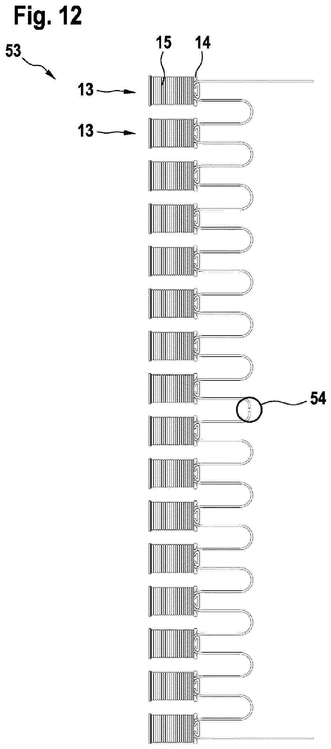

Für eine einfache Herstellung und Montage werden Spulenketten 53 gemäß Fig. 12 verwendet. Die einzelne Spulenkette 53 weist mehrere Spulenkörper 14 auf. Der Draht wird jeweils um einen Spulenkörper 14 gewickelt und führt zum nächsten Spulenkörper 14 und wird wiederum zu einer Spule 13 gewickelt. Dadurch entstehen mehrere zusammenhängende Spulen 13 inkl. Spulenkörper 14. Diese Spulenketten 43 können sehr einfach auf das Statorblechpaket 11 montiert werden. Über gelötete Verbindungstellen 54 können die Drähte zu mehreren Ketten verbunden werden.

Nach dem Aufstecken der Spulenketten 53 werden die Drähte zwischen den Spulen 13 in die entsprechenden Schlitze 47 der Drahtführungselemente 46 eingesteckt.

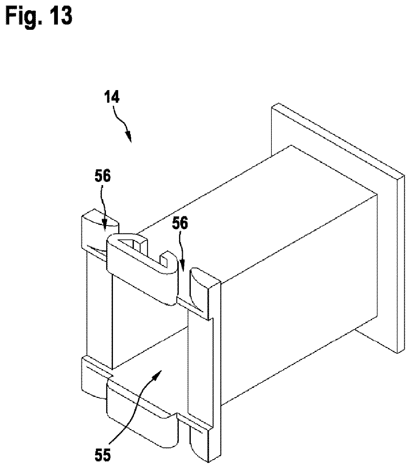

Fig. 13 zeigt im Detail einen der Spulenkörper 14. Im Spulenkörper 14 sind durch entsprechend abgerundete Schlitze Drahtein-/-ausläufe 56 vorgesehen, um den Draht definiert in den gewickelten Zustand überzuführen. Im Inneren der Spulenkörper 14 ist ein entsprechender Hohlraum 55 vorgesehen. In diesen Hohlraum 55 ragt im montierten Zustand ein Zahn 23.

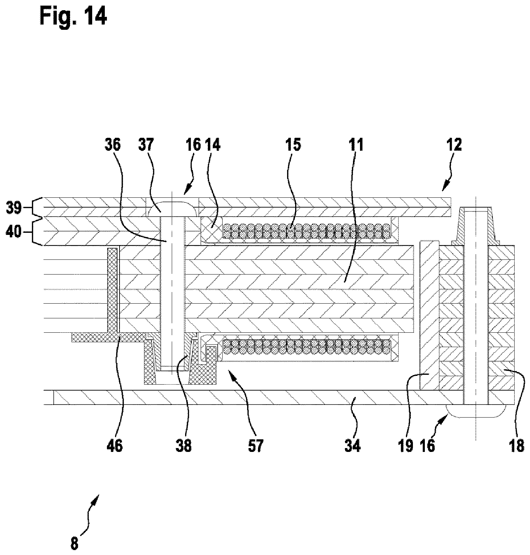

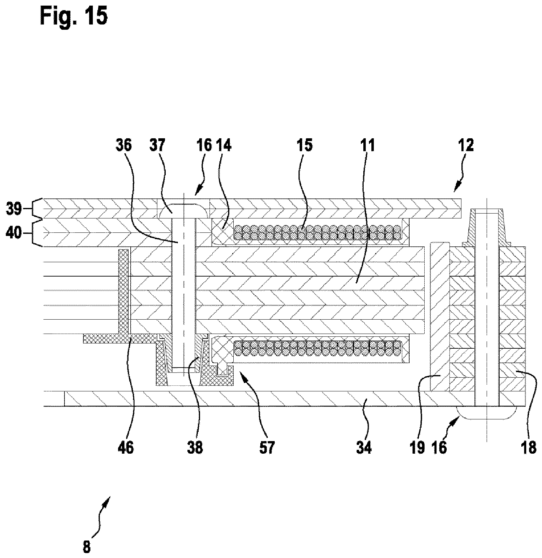

Fig. 14 und 15 zeigen in Schnittansichten zwei mögliche Varianten für die genaue Ausbildung der Drahtführungselemente 46. In beiden Varianten gibt es eine direkte formschlüssige Verbindung 57 zwischen dem Drahtführungselement 46 und dem Spulenkörper 14. Gemäß Fig. 14 ragt ein Fortsatz des Drahtführungselementes 46 in eine entsprechende Nut des Spulenkörpers 14. Gemäß Fig. 15 ragt ein entsprechender Fortsatz des Spulenkörpers 14 in eine Nut des Drahtführungselementes 46.

In beiden Varianten ist eine einfache und schnelle Montage sowie eine gegenseitige Fixierung der Drahtführungselemente 46 und der Spulenkörper 14 möglich.

Ferner zeigen Fig. 14 und 15 eines der Verbindungselemente 16, welches zur Montage des Statorblechpaketes 11 genutzt wird. Diese Verbindungselemente 16 weisen, wie bereits beschrieben, entsprechende Schließringe 38 auf. Diese Schließringe 38 werden hier zur Positionierung und/oder Fixierung der Drahtführungselemente 46 verwendet. Dies erfolgt, indem die Drahtführungselemente 46 auf diese Schließringe 38 aufgesteckt werden.

Ferner zeigt die Zusammenschau auf Fig. 11 mit Fig. 14 und Fig. 15, dass die Drahtführungselemente 46 Dome 48 aufweisen. Diese Dome 48 sind integrale Fortsätze der Drahtführungselemente 46, die sich in Axialrichtung 5 in Richtung der Rotorscheibe 34 erstrecken.

Wie anhand von Fig. 2 gezeigt wurde, befindet sich die axiale und radiale Lagerung zwischen Rotor 17 und Stator 10 relativ weit in der Mitte. Dadurch könnte es zu einem Verkippen des Rotors 17 gegenüber dem Stator 10 kommen. Um dieses Verkippen zu begrenzen, sind die Dome 48 vorgesehen. Die Rotorscheibe 34 kann an diesen Domen 48 bei einem entsprechenden Verkippen aufliegen.

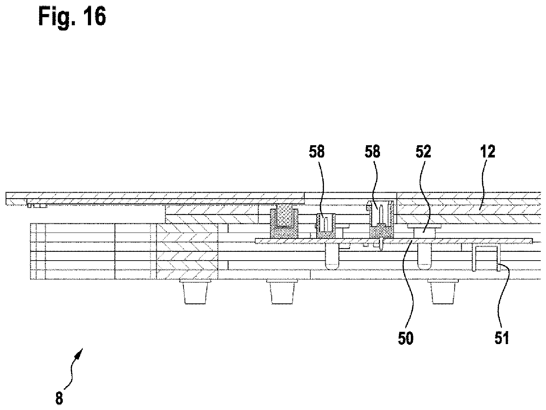

Fig. 16 zeigt im Detail eine Schnittansicht des Antriebs 8. Dieser Schnitt führt durch die in Fig. 11 gezeigte Leiterplatte 50. An der Leiterplatte 50 sind Anschlussstecker 58 ausgebildet. Diese ragen nach oben, also in Richtung der Statorscheibe 12. In der Statorscheibe 12 ist eine entsprechende Aussparung vorgesehen, so dass die Anschlussstecker 58 von oben zugänglich sind. Dabei zeigt Fig. 16 auch, dass die Anschlussstecker 58 nicht über die Statorscheibe 12 hinausragen und somit während des Transports geschützt angeordnet sind. Die beiden Anschlussstecker 58 dienen zur strom- und datenführenden Anbindung des Antriebs 8.

### Bezugszeichenliste

- A: Drehkreuzdurchmesser
- B: Rotordurchmesser
- C: Antriebshöhe
- D: Karusselltürrastzahl
- E: Auslegungskoeffizienten
- F: Spulenanzahl
- G: Statorsegmentanzahl
- H: Segmentwinkel
- I: Reduktionswinkel
- K: Kopfradius
- L: Zahnbreite
- M: Statordurchmesser
- N: Rotorsegmentanzahl
- T: Eckenradius
- U: Magnetanzahl

- 1: Karusselltür
- 2: Drehkreuz
- 3: Türflügel
- 4: Drehachse
- 5: Axialrichtung
- 6: Radialrichtung
- 7: Umfangsrichtung
- 8: Antrieb
- 9: Abtriebselement
- 10: Stator
- 11: Statorblechpaket
- 12: Statorscheibe
- 13: Spulen
- 14: Spulenkörper
- 15: Wicklung
- 16: Verbindungselemente (Schließringbolzensystem)
- 17: Rotor
- 18: Rotorblechpaket
- 19: Permanentmagneten
- 20: Axiallager
- 21: Radiallager
- 22: geschlossener Ring
- 23: Zähne
- 24: Statorring
- 25: Statorsegmente
- 26: Stöße
- 27: Verbindungslöcher
- 32: Rotorringe
- 33: Rotorsegmente
- 34: Rotorscheibe
- 36: Bolzen
- 37: Köpfe
- 38: Schließringe
- 39: erste Scheibenbleche
- 40: zweite Scheibenbleche
- 41: axialer Bauraum
- 42: radialer Bauraum
- 43: Bolzendurchmesser
- 44: Verbindungslochdurchmesser
- 45: Positionierungsfortsätze
- 46: Drahtführungselemente
- 47: Schlitze
- 48: Dome
- 49: Anlaufflächen
- 50: Leiterplatte
- 51: Schneidklemmen
- 52: Rastverbindung
- 53: Spulenkette
- 54: Verbindungstelle (Lötstelle)
- 55: Hohlraum
- 56: Drahtein-/-auslauf
- 57: direkte formschlüssige Verbindung
- 58: Anschlussstecker
- 59: erster Überstand
- 62: zweiter Überstand

## Patentansprüche

1. Karusselltür (1) umfassend
• ein Drehkreuz (2) mit zumindest zwei Türflügeln (3), wobei das Drehkreuz (2) um eine Drehachse (5) drehbar ist, wobei entlang der Drehachse (5) eine Axialrichtung (5) und senkrecht zur Axialrichtung (5) eine Radialrichtung (6) definiert sind, und
• einen elektrischen Antrieb (8), ausgebildet als elektronisch kommutierter Vielpolmotor mit einem Stator (10) umfassend ein Statorblechpaket (11) und mehrere Spulen (13), und einem Rotor (17), umfassend ein Rotorblechpaket (18) und mehrere Permanentmagneten (19), wobei das Statorblechpaket (11) einen geschlossenen Ring (22) und radiale Zähne (23) zum Aufstecken der Spulen (13) umfasst, wobei das Statorblechpaket (11) aus mehreren gestapelten Statorringen (24) zusammengesetzt ist und wobei vorzugsweise der einzelne Statorring (24) aus mehreren in Umfangsrichtung nebeneinander angeordneten Statorsegmenten (25) zusammengesetzt ist,
• wobei der Rotor (17) koaxial zur Drehachse angeordnet ist, und mit dem Drehkreuz (2) zum direkten, getriebelosen Antrieb verbunden ist, **dadurch gekennzeichnet, dass**
• der Stator (10) jeweils eine Spulenkette (53) pro Phase umfasst, wobei jede Spulenkette mehrere Spulenkörper (14) aus Kunststoff und einen durchgehenden Draht umfasst, wobei der Draht auf den Spulenkörpern (14) gewickelt ist und von einem Spulenkörper (14) zum nächsten Spulenkörper (14) führt.

2. Karusselltür nach Anspruch 1, **dadurch gekennzeichnet, dass** die Zähne (23) an ihren Flanken eine Verdickung zum Halten der Spulen aufweisen, indem die Zähne (23) in einer zur Drehachse (4) senkrechten Ebene eine Zahnbreite (L) aufweisen und die Zahnbreite (L) an der Wurzel des Zahns (23) und am Kopf des Zahns (23) kleiner ist als in der Mitte des Zahns (23).

3. Karusselltür nach Anspruch 1, **dadurch gekennzeichnet, dass** der durchgehende Draht einer Spulenkette (53) höchstens drei, vorzugsweise höchsten zwei, besonders vorzugsweise höchsten eine, Verbindungsstelle (54), insbesondere Lötstelle, aufweist.

4. Karusselltür nach einem der vorhergehenden Ansprüche, **dadurch gekennzeichnet, dass** der Stator (10) radial innerhalb der Spulen zumindest ein Drahtführungselement (46) in Ringform oder mehrere Drahtführungselemente (46) in Segmentform aufweist, wobei an dem zumindest einem Drahtführungselement (46) die Drähte der Spulen (13) geführt und/oder befestigt sind.

5. Karusselltür nach Anspruch 4 , **dadurch gekennzeichnet, dass** die Statorringe (24), insbesondere die Statorsegmente (25), mittels Verbindungselementen (16) verbunden sind, wobei sich die Verbindungselemente (16) in Axialrichtung erstrecken, und wobei das zumindest eine Drahtführungselement (46) an Enden der Verbindungselemente (16) positioniert und/oder befestigt ist.

6. Karusselltür nach einem der Ansprüche 4 oder 5, **dadurch gekennzeichnet, dass** die Drähte der Spulen (13) in Schlitze (47) des zumindest einen Drahtführungselements (46) eingelegt sind, sodass die Drähte in den Schlitzen die Spulen (13) und das zumindest eine Drahtführungselement (46) gegenseitig fixieren.

7. Karusselltür nach einem der Ansprüche 4 bis 6, **gekennzeichnet durch** eine direkt formschlüssige Verbindung zwischen dem zumindest einen Drahtführungselement (46) und den einzelnen Spulenkörpern (14).

8. Karusselltür nach einem der Ansprüche 4 bis 7, **dadurch gekennzeichnet, dass** das zumindest einen Drahtführungselement (46)
• mit Ausnahme der optionalen Fixierung an den Enden der Verbindungselemente (16),
• mit Ausnahme der optionalen Fixierung über die Drähte in den Schlitzen (47), und
• mit Ausnahme der direkten formschlüssigen Verbindung mit den Spulenkörpern (14),
weder über weitere Elemente, wie Nieten oder Schrauben, noch über stoffschlüssige Mittel am Stator (10) befestigt ist.

9. Karusselltür nach einem der vorhergehenden Ansprüche, **dadurch gekennzeichnet, dass** die Spulen (13), insbesondere die Spulenkörper (14),
• mit Ausnahme der optionalen Verdickung an den Flanken der Zähne zum Halten der Spulen (13),
• mit Ausnahme der optionalen Fixierung über die Drähte in den Schlitzen (47), und
• mit Ausnahme der direkten formschlüssigen Verbindung mit dem Drahtführungselement (46),
weder über weitere Elemente, wie Nieten oder Schrauben, noch über stoffschlüssige Mittel am Stator (10) befestigt sind.

10. Karusselltür nach einem der vorhergehenden Ansprüche, **dadurch gekennzeichnet, dass** der Stator (10) zumindest eine Anlauffläche (49), vorzugsweise aus Kunststoff, umfasst, wobei die Anlauffläche (49) radial außerhalb des halben Statordurchmessers (M) ausgebildet ist, wobei die Anlauffläche (49) im normalen Betrieb vom Rotor (17) beabstandet ist, und wobei bei einem Kippen des Rotors (17) der Rotor (17) an der Anlauffläche (49) anliegt.

11. Karusselltür nach Anspruch 10, **dadurch gekennzeichnet, dass** die zumindest eine Anlauffläche (49) an den Spulenkörpern (14) und/oder dem zumindest einen Drahtführungselement (46) ausgebildet ist, wobei vorzugsweise mehrere Anlaufflächen (49) durch mehrere sich in Axialrichtung erstreckende Dome (48) gebildet sind.

12. Karusselltür nach einem der vorhergehenden Ansprüche, **gekennzeichnet durch** eine im Stator (10) angeordnete Leiterplatte (50), wobei die Drähte der Spulen (13) mit der Leiterplatte (50) kontaktiert sind, und zumindest einen mit der Leiterplatte (50) kontaktierten Anschlussstecker (58), wobei der zumindest eine Anschlussstecker (58) fest am Stator (10), und nicht lose über Kabel, befestigt ist.

13. Karusselltür nach Anspruch 12, **dadurch gekennzeichnet, dass** der Anschlussstecker (58) in einer Aussparung der Statorscheibe (12) sitzt, an einer ersten Seite der Statorscheibe (12) mit der Leiterplatte (50) kontaktiert ist, und an der gegenüberliegenden zweiten Seite zum Einstecken eines Gegensteckers zugänglich ist.

## Claims

1. A revolving door (1), comprising
• a turnstile (2) having at least two door leaves (3), wherein the turnstile (2) is rotatable about an axis of rotation (4), wherein an axial direction (5) along the axis of rotation (4) and a radial direction (6) vertically with regard to the axial direction (5) are defined, and
• an electrical drive, configured as an electronically commuted multi-pole motor having a stator (10), comprising a laminated stator core (11) and several coils (13), and a rotor (17), comprising a laminated rotor core (18), and several permanent magnets (19),
• wherein the laminated stator core (11) comprises a closed ring (22) and radial teeth (23) for placing the coils (13) thereon, wherein the laminated stator core (11) is composed of several stacked stator rings (24), and wherein preferably the individual stator ring (24) is composed of several stator segments (25) disposed next to each other in the circumferential direction,
• wherein the rotor (17) is disposed coaxially with regard to the axis of rotation, and connected to the turnstile (2) for the direct gear-less drive, **characterized in that**
• the stator (10) comprises respectively one coil chain (53) per phase, wherein each coil chain comprises several coil bodies (14) made from plastic material and having a continuous wire, wherein the wire is wound onto the coil bodies (14) and leads from one coil body (14) to the next coil body (14).

2. The revolving door according to claim 1, **characterized in that** the teeth (23) include a thickening at their flanks for retaining the coils, **in that** the teeth (23) in a plane vertical with regard to the axis of rotation (4) have a tooth width (L), and the tooth width (L), at the root of the tooth (23) and at the top of the tooth (23), is smaller than in the centre of the tooth (23).

3. The revolving door according to claim 1, **characterized in that** the continuous wire of a coil chain (53) includes at maximum three, preferably at maximum two, particularly preferred at maximum one connecting location (54), in particular a welding location.

4. The revolving door according to any of the preceding claims, **characterized in that** the stator (10), radially within the coils, includes at least one wire guiding element (46) in ring shape or several wire guiding elements (46) in a segment shape, wherein the wires of the coils (13) are guided at and/or attached to the at least one wire guiding element (46).

5. The revolving door according to claim 4, **characterized in that** the stator rings (24), in particular the stator segments (25), are connected by means of connecting elements (16), wherein the connecting elements (16) extend in axial direction, and wherein the at least one wire guiding element (46) is positioned at and/or attached to ends of the connecting elements (16).

6. The revolving door according to any of the claims 4 or 5, **characterized in that** the wires of the coils (13) are inserted into slots (47) of the at least one wire guiding element (46), such that the wires in the slots mutually affix the coils (13) and the at least one wire guiding element (46).

7. The revolving door according to any of the claims claim 4 to 6, **characterized by** a direct positive connection between the at least one wire guiding element (46) and the individual coil bodies (14).

8. The revolving door according to any of the claims 4 to 7, **characterized in that** the at least one wire guiding element (46)
• with the exception of the optional affixing to the ends of the connecting elements (16),
• with the exception of the optional affixing via the wires in the slots (47), and
• with the exception of the direct positive connection to the coil bodies (14),
are neither attached to the stator (10) via any further elements, such as rivets or screws, nor via positive means by material.

9. The revolving door according to any of the preceding claims, **characterized in that** the coils (13), in particular the coil bodies (14),
• with the exception of the optional thickening at the flanks of the teeth for retaining the coils (13),
• with the exception of the optional affixing via the wires in the slots (47), and
• with the exception of the direct positive connection via material to the wire-guiding element (46),
are neither attached to the stator (10) by means of any further elements, such as rivets or screws, nor via positive means by material.

10. The revolving door according to any of the preceding claims, **characterized in that** the stator (10) comprises at least one stopping face (49), preferably made from plastic material, wherein the stopping face (49) is configured radially outside half the stator diameter (M), and wherein, in normal operation, the stopping face (49) is spaced apart from the rotor (17), and wherein, during tilting of the rotor (17), the rotor (17) abuts against the stopping face (49).

11. The revolving door according to claim 10, **characterized in that** the at least one stopping face (49) is configured at the coil bodies 14) and/or the at least one wire-guiding element (46), wherein preferably several stopping faces (49) are configured by means of several domes (48) extending in axial direction.

12. The revolving door according to any of the preceding claims, **characterized by** a printed circuit board (50) disposed within the stator (10), wherein the wires of the coils (13) are contacting the printed circuit board (50), and at least one connector plug (58) contacting the printed circuit board (58), wherein the at least one connector plug (58) is firmly attached to the stator (10), and not loosely via cables.

13. The revolving door according to claim 12, **characterized in that** the connector plug (58) is seated in a cavity of the stator disc (12), is contacting the printed circuit board (50) at a first side of the stator disc (12), and at the opposite second side, is accessible for inserting a counter-plug.

## Revendications

1. Porte tambour (1), comportant
• un tourniquet (2) ayant au moins deux vantaux de porte (3), le tourniquet (2) étant rotatif autour d'un axe de rotation (4), dans lequel sont définies le long de l'axe de rotation (4), une direction axiale (5), et verticalement par rapport à la direction axiale (5) une direction radiale (6), et
• un entraînement électrique (8), aménagé comme moteur à pôles multiples commutant électroniquement avec un stator (10) comportant un empilage de tôles de stator (11) et plusieurs bobines (13), et un rotor (17) comportant un empilage de tôles de rotor (18) et plusieurs aimants permanents (19),
• l'empilage de tôles de stator (11) comportant un anneau fermé (22) et des dents radiaux (23) pour le garnissage des bobines (13), l'empilage de tôles de stator (11) étant composé de plusieurs anneaux de stator (24) empilés et l'anneau de stator (24) individuel étant composé de préférence de plusieurs segments de stator (25) agencés l'un à côté de l'autre dans la direction circonférentielle,
• le rotor (17) étant agencé coaxialement par rapport à l'axe de rotation et étant connecté au tourniquet (2) pour l'entraînement direct sans engrenages,
**caractérisée en ce que**
• le stator (10) comporte respectivement une chaîne de bobines (53) par phase, chaque chaîne de bobines comportant plusieurs corps de bobines (14) en matière plastique et un fil de fer continu, le fil de fer étant enroulé sur les corps de bobines (14) et menant d'un corps de bobine (14) au prochain corps de bobine (14).

2. Porte tambour selon la revendication 1, **caractérisée en ce que** les dents (23) possèdent un épaississement à leurs flancs pour retenir les bobines, **en ce que** les dents (23) dans un plan vertical à l'axe de rotation (4) ont une épaisseur de dent (L), et l'épaisseur de dent (L) est plus petite à la racine de la dent (23) et à la tête de la dent (23) que dans le centre de la dent (23).

3. Porte tambour selon la revendication 1, **caractérisée en ce que** le fil de fer continu d'une chaîne de bobines (53) comprend au maximum trois, de préférence au maximum deux, tout particulièrement préféré au maximum un endroit de connexion (54), tout particulièrement un point de soudure.

4. Porte tambour selon l'une des revendications précédentes, **caractérisée en ce que** le stator (10) radialement à l'intérieur des bobines comprend au moins un élément de guidage de fil de fer (46) en forme d'anneau ou plusieurs éléments de guidage de fil de fer (46) en forme de segment, les fils de fer des bobines (13) étant guidés et/ou attachés sur ledit au moins un élément de guidage de fil de fer (46).

5. Porte tambour selon la revendication 4, **caractérisée en ce que** les anneaux de stator (24), tout particulièrement les segments de stator (25), sont connectés au moyen d'éléments de connexion (16), les éléments de connexion (16) s'étendant en direction axiale, et ledit au moins un élément de guidage de fil de fer (46) étant positionné sur les et/ou attaché aux extrémités des éléments de connexion (16).

6. Porte tambour selon l'une des revendications 4 ou 5, **caractérisée en ce que** les fils de fer des bobines (13) sont posés dans des fentes (47) dudit au moins un élément de guidage de fil de fer (46) de sorte que les fils de fer dans les fentes fixent mutuellement les bobines (13) et ledit au moins un élément de guidage de fil de fer (46).

7. Porte tambour selon l'une des revendications 4 à 6, **caractérisée par** une connexion directe par la forme entre ledit au moins un élément de guidage de fil de fer (46) et les corps de bobines (14) individuels.

8. Porte tambour selon l'une des revendications 4 à 7, **caractérisée en ce que** ledit au moins un élément de guidage de fil de fer (46)
• à l'exception de la fixation optionnelle aux extrémités des éléments de connexion (16),
• à l'exception de la fixation optionnelle par l'intermédiaire des fils de fer dans les fentes (47), et
• à l'exception de la connexion directe par la forme aux corps de bobines (14),
n'est ni attaché sur le stator (10) par l'intermédiaire d'autres éléments, comme des rivets ou écrous, ni par l'intermédiaire de moyens par la matière.

9. Porte tambour selon l'une des revendications précédentes, **caractérisée en ce que** les bobines (13), tout particulièrement les corps de bobines (14),
• à l'exception de l'épaississement optionnel aux flancs des dents pour retenir les bobines (13),
• à l'exception de la fixation optionnelle par l'intermédiaire des fils de fer dans les fentes (47), et
• à l'exception de la connexion directe par la forme à l'élément de guidage de fil de fer (46),
ne sont ni attachés sur le stator (10) par l'intermédiaire d'autres éléments, comme des rivets ou écrous, ni par l'intermédiaire de moyens par la matière.

10. Porte tambour selon l'une des revendications précédentes, **caractérisée en ce que** le stator (10) comporte au moins une surface d'arrêt (49), de préférence en matière plastique, la surface d'arrêt (49) étant aménagée radialement à l'extérieur de la moitié du diamètre de stator (M), en opération normale la surface d'arrêt (49) étant espacée du rotor (17) et, lors d'un basculement du rotor (17), le rotor (17) étant appliqué contre la surface d'arrêt (49).

11. Porte tambour selon la revendication 10, **caractérisée en ce que** ladite au moins une surface d'arrêt (49) est aménagée sur les corps de bobines (14) et/ou sur ledit au moins un élément de guidage de fil de fer (46), de préférence plusieurs surfaces d'arrêt (49) étant aménagées par plusieurs dômes (48) s'étendant en direction axiale.

12. Porte tambour selon l'une des revendications précédentes, **caractérisée par** une carte à circuit imprimée (50) agencée dans le stator (10), les fils de fer des bobines (13) étant contactés à la carte à circuit imprimé (50), et au moins une fiche de raccordement (58) contactée à la carte à circuit imprimé (50), ladite au moins une fiche de raccordement (58) étant fermement attachée au stator (10) et ne pas mobile par un câble.

13. Porte tambour selon la revendication 12, **caractérisée en ce que** la fiche de raccordement (58) est placée dans un évidement du disc de stator (12), sur une première face du disc de stator (12) est contactée à la carte à circuit imprimé (50), et sur la deuxième face opposée est accessible pour enficher une contrefiche.
